(19) Europäisches Patentamt
European Patent Office
Office européen des brevets

(11) **EP 3 462 210 B1**

(12) **FASCICULE DE BREVET EUROPEEN**

(45) Date de publication et mention de la délivrance du brevet:
**14.02.2024 Bulletin 2024/07**

(21) Numéro de dépôt: **18197318.1**

(22) Date de dépôt: **27.09.2018**

(51) Classification Internationale des Brevets (IPC):
**F41G 3/04** $^{(2006.01)}$ **F41G 3/06** $^{(2006.01)}$
**F41G 3/16** $^{(2006.01)}$ **G01S 13/72** $^{(2006.01)}$
**G01S 13/86** $^{(2006.01)}$ **F42B 12/56** $^{(2006.01)}$
**F42C 11/06** $^{(2006.01)}$ **F41H 11/02** $^{(2006.01)}$
**F42B 12/58** $^{(2006.01)}$

(52) Classification Coopérative des Brevets (CPC):
**G01S 13/867; F41G 3/04; F41G 3/06; F41G 3/165; F41H 11/02; F42B 12/56; F42B 12/58; F42C 11/065; G01S 13/72**

(54) **PROCÉDÉ ET DISPOSITIF DE LANCEMENT DE PROJECTILES SUR UNE CIBLE À ATTEINDRE**

VERFAHREN UND VORRICHTUNG ZUM ABSCHIESSEN VON PROJEKTILEN AUF EIN ZIEL

METHOD AND DEVICE FOR LAUNCHING PROJECTILES ONTO A TARGET TO BE REACHED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2017 FR 1700991**

(43) Date de publication de la demande:
**03.04.2019 Bulletin 2019/14**

(73) Titulaire: **Thales**
**92400 Courbevoie (FR)**

(72) Inventeurs:
• **BARAT, Dominique**
**94628 RUNGIS Cedex (FR)**
• **DUPUYTRENT, Cyril**
**94628 RUNGIS Cedex (FR)**

(74) Mandataire: **Lavoix**
**2, place d'Estienne d'Orves**
**75441 Paris Cedex 09 (FR)**

(56) Documents cités:
**DE-A1-102007 007 404      US-A- 5 834 675**
**US-A1- 2006 175 464      US-A1- 2010 117 888**

**Description**

La présente invention concerne un procédé de lancement de projectiles sur une cible à atteindre, par un dispositif de lancement adapté à lancer un projectile primaire non guidé et porteur d'une pluralité de projectiles secondaires. Elle concerne également un dispositif de lancement associé.

L'invention se situe dans le domaine du lancement de projectiles programmables emportant une charge utile composée de projectiles secondaires, pour atteindre une cible donnée.

Le dispositif de lancement du projectile primaire programmable est par exemple au sol, ou embarqué à bord d'un porteur mobile.

La cible à atteindre peut être aérienne, terrestre, balistique ou navale, et elle peut être en mouvement ou statique.

Le projectile primaire est lancé par le dispositif de lancement, et à un instant ultérieur au lancement est déclenchée la dispersion des projectiles secondaires, appelée également dépotage, en direction de la cible à atteindre. La dispersion des projectiles secondaires est programmée au lancement, par exemple en indiquant l'instant de dispersion, ou un temps de vol du projectile primaire avant dispersion.

Les projectiles secondaires se dispersent à l'intérieur d'un cône de dispersion. On appelle distance de dispersion ou de dépotage la distance entre le point de dispersion et le plan d'interception de la cible, c'est-à-dire le plan dans lequel la cible entre dans le cône de dispersion des projectiles secondaires.

De manière classique, la valeur optimale de distance de dispersion est calculée en usine préalablement à l'utilisation, en fonction de simulations faisant intervenir la cinématique du projectile primaire et des projectiles secondaires, en utilisant des modèles de vulnérabilité de chaque sous-ensemble constitutif de la cible. La distance de dispersion à utiliser au moment du tir réel est sélectionnée alors dans une table mémorisée suite aux simulations préalables, par exemple en fonction de la cinématique estimée de la cible.

Cependant, les valeurs pré-calculées par simulation ne sont pas complètement adaptées à une situation opérationnelle. De plus, les simulations préalables mettent en oeuvre des modèles de vulnérabilité complexes, et qui ne sont pas adaptés à tout type de cible.

Le document US 2006/175464 A1 décrit une méthode et un dispositif de protection active contre une menace de type missile.

Le document US 2010/117888 A1 un procédé de lancement de projectiles sur une cible à atteindre.

Il est donc utile de mettre au point un procédé d'évaluation de la distance de dispersion mieux adapté aux situations opérationnelles.

A cet effet, l'invention propose un procédé de lancement de projectiles sur une cible à atteindre conforme à la revendication 1.

Avantageusement, le procédé de l'invention met en oeuvre des paramètres caractérisant la cible poursuivie, et un calcul analytique qui est réalisable en temps réel.

Le procédé de lancement de projectiles selon l'invention peut également présenter une ou plusieurs des caractéristiques selon les revendications dépendantes.

Selon un autre aspect, l'invention concerne un dispositif de lancement de projectiles sur une cible conforme à la revendication 6.

Selon un mode de réalisation, ce dispositif comprend en outre un module de programmation de la dispersion d'un projectile primaire.

Selon un autre aspect, l'invention concerne un programme d'ordinateur comportant des instructions logicielles qui, lorsqu'elles sont mises en oeuvre par un dispositif de calcul adapté à coopérer avec un dispositif de lancement de projectile tel que brièvement décrit ci-dessus, mettent en oeuvre un procédé de lancement de projectiles tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

- la figure 1 est une illustration schématique d'une configuration d'interception de cible;
- la figure 2 est une illustration de la configuration de tir dans un repère à trois dimensions ;
- la figure 3 est une représentation de l'image de la cible telle qu'elle serait vue dans le champ d'un capteur optronique ;
- la figure 4 est un synoptique des principales étapes d'un procédé de lancement de projectiles selon un mode de réalisation ;
- la figure 5 est un schéma bloc des principaux blocs fonctionnels d'un dispositif de lancement selon un mode de réalisation.

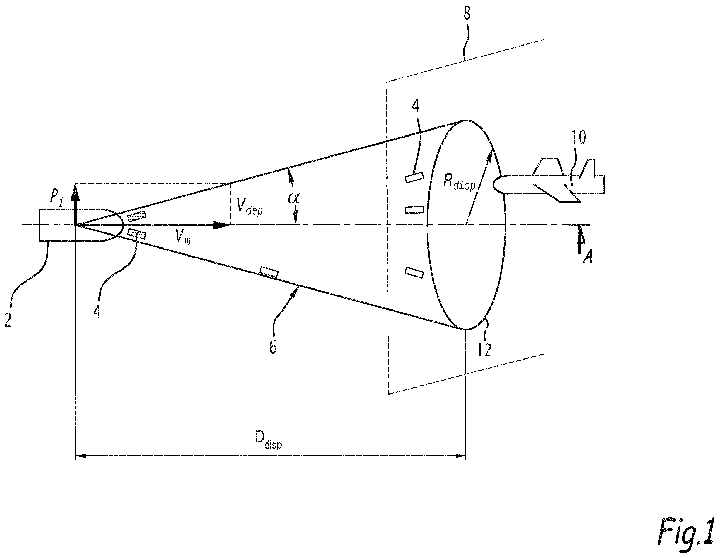

La figure 1 illustre schématiquement une configuration de lancement de projectiles dans laquelle est appliqué le procédé de l'invention.

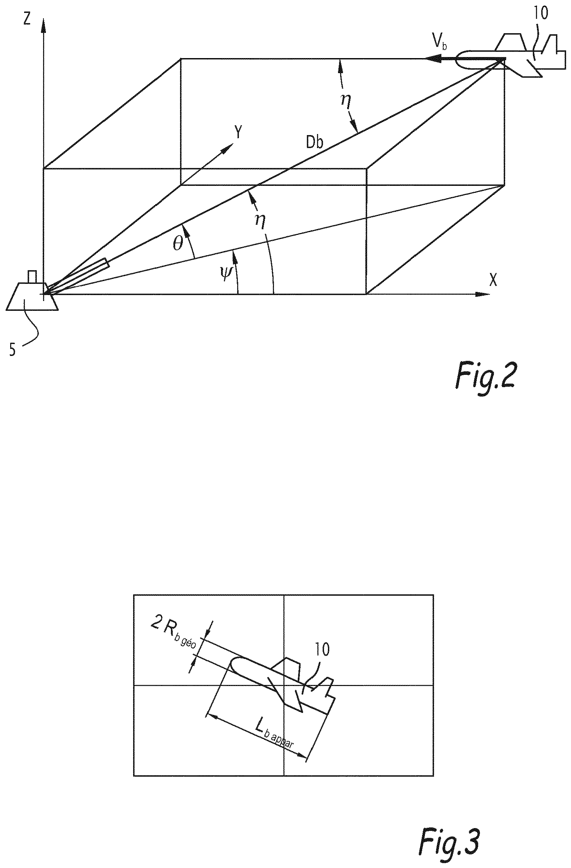

Un projectile primaire 2 est lancé par un dispositif de lancement 5, représenté figure 2.

Le projectile primaire est, par exemple, un obus non guidé tiré d'un canon à cadence de tir élevée.

Le point $P_1$ est le point de dispersion des projectiles secondaires 4 constituant l'emport du projectile primaire 2. Un instant de dispersion $t_1$, non représenté sur la figure 1, est associé au point $P_1$. Le projectile primaire 2 a une vitesse $V_m$ à l'instant $t_1$.

Le point $P_1$ est un point spatial dans un référentiel géométrique donné.

La dispersion génère une gerbe de projectiles secondaires 4, comprise dans un cône de révolution 6 appelé cône de dispersion.

Les projectiles secondaires atteignent un plan 8 intersectant la cible 10, appelé plan d'interception. Le plan d'interception 8 est orthogonal à l'axe de révolution A du cône de dispersion 6.

L'intersection du cône de dispersion 6 et du plan d'interception 8 détermine un cercle de dispersion 12 dont le rayon $R_{disp}$ est appelé rayon de dispersion.

Le cône de dispersion 6 est défini par le point de dispersion $P_1$, qui est son sommet, et par le demi-angle de révolution $\alpha$ entre l'axe de révolution A et une droite génératrice du cône.

La distance entre le point de dispersion $P_1$ et le plan d'interception 8 est appelée distance de dispersion $D_{disp}$.

L'objectif de la dispersion des projectiles secondaires est, d'une part, de compenser les erreurs qui affectent la trajectoire du projectile primaire non guidé, et, d'autre part, de réaliser des impacts sur la cible 10, en maximisant l'endommagement de celle-ci.

Pour réaliser cet objectif, il est proposé de calculer un rayon de dispersion optimal, noté $R_{dispopt}$, permettant de maximiser la probabilité d'endommagement de la cible.

Le calcul est effectué au moment du lancement du projectile primaire et en prenant en compte des paramètres caractéristiques de la cible, du dispositif de lancement, et des projectiles primaire et secondaires, évalués en situation opérationnelle.

La figure 2 illustre schématiquement un dispositif de lancement de projectiles 5 et une cible 10 en mouvement, ayant un vecteur de vitesse $V_b$ associé.

La figure 2 illustre les angles $\theta, \eta, \psi$ dont l'utilisation sera explicitée par la suite, ainsi que la distance $D_b$ entre le point de lancement du projectile primaire et la cible.

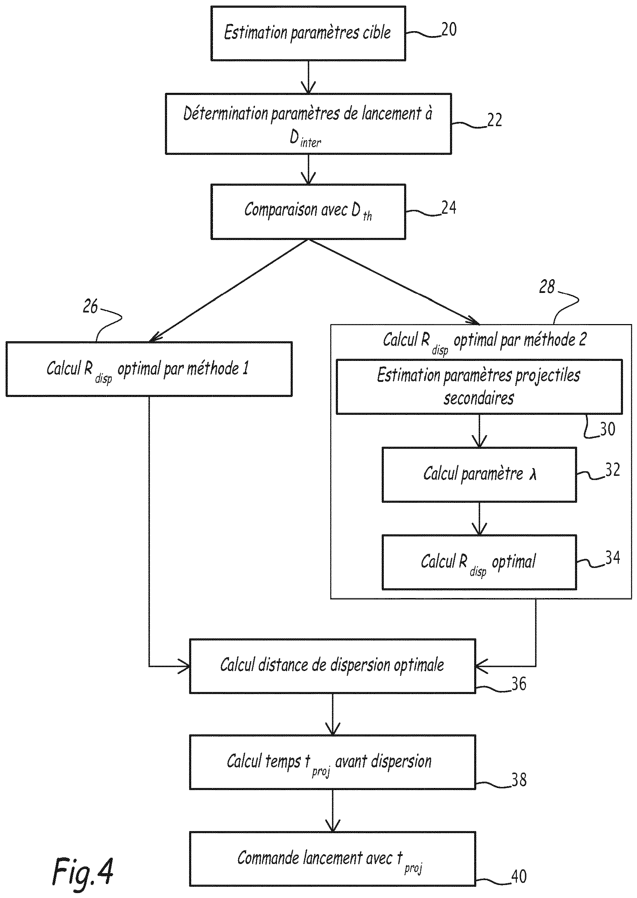

La figure 4 est un synoptique des principales étapes d'un procédé de lancement de projectile selon un mode de réalisation de l'invention.

Le procédé comprend une première étape 20 d'estimation de paramètres de la cible en utilisant des capteurs du dispositif de lancement.

Les paramètres estimés comprennent : la vitesse estimée de la cible $V_b$, un rayon équivalent de la cible $R_{b\,eq}$, un type de cible parmi un ensemble de types prédéterminés.

Par exemple, la vitesse de la cible est estimée par une méthode de poursuite de cible connue dans l'état de la technique, effectuée par un dispositif de poursuite de cible comprenant un capteur optronique, combinant une mesure de la distance cible et une mesure des vitesses angulaires de la droite ayant pour origine le dispositif de poursuite de cible et pour extrémité la cible.

On entend par rayon équivalent de la cible le rayon du cercle dont la surface est égale à la surface apparente de la cible vue du projectile primaire et correspondant à l'équation suivante :

$$\pi R_{b\,eq}^2 = \pi R_{b\,géo}^2 \cos\eta + 2 R_b L_{b\,géo} \sin\eta \qquad \text{(EQ1)}$$

D'où :

$$R_{b\,eq} = R_{b\,géo} \sqrt{\cos\eta + \frac{2 L_{b\,géo} \sin\eta}{\pi R_{b\,géo}}} \qquad \text{(EQ2)}$$

$R_{b\,eq}$ désigne le rayon équivalent de la cible

$R_{b\,géo}$ désigne le rayon géométrique du fuselage de la cible

$L_{b\,géo}$ désigne la longueur géométrique de la cible

L'angle $\eta$, illustré sur la figure 2, est l'angle entre la direction d'arrivée du projectile primaire et l'axe longitudinal de la cible.

Cet angle est déterminé au moyen de la relation trigonométrique suivante :

$$\sin \eta = \sqrt{\sin^2 \psi + \sin^2 \theta \cos^2 \psi} \qquad \text{(EQ3)}$$

Les angles $\psi$ et $\theta$ caractérisent la direction de visée de la cible, que l'on assimile à la direction de l'interception par le projectile primaire.

Les paramètres du tir peuvent être déterminés à partir des mesures effectuées par le système de poursuite de la cible.

Un dispositif de mesure de la distance permet de mesurer la distance $D_b$ entre le point de lancement du projectile primaire et la cible et d'obtenir la dérivée de la distance $D_b$, au moyen d'un filtre dérivateur.

Un dispositif de poursuite angulaire permet de mesurer la vitesse angulaire de la direction de la cible selon ses deux composantes :

$\omega_{gis}$ : vitesse angulaire en gisement

$\omega_{site}$ : vitesse angulaire en site

Les mesures effectuées par le système de poursuite sont reliées aux paramètres géométriques par l'intermédiaire des relations suivantes :

$$\dot{D}_b = -V_b \cos \psi \cos \theta \qquad \text{(EQ4)}$$

$$\omega_{site} = \frac{V_b}{D_b} \cos \psi \sin \theta \qquad \text{(EQ5)}$$

$$\omega_{gis} = \frac{V_b}{D_b} \sin \psi \cos \theta \qquad \text{(EQ6)}$$

Le site $\theta$ de la direction de la cible est mesuré directement par le système de poursuite comme étant l'angle de la direction de visée par rapport au plan horizontal.

L'angle de gisement $\psi$ est obtenu au moyen de l'expression :

$$\tan \psi = \frac{\omega_{gis}}{\omega_{site}} \tan \theta \qquad \text{(EQ7)}$$

Le module de la vitesse de la cible est obtenu au moyen de l'expression :

$$V_b = \frac{-\dot{D}_b}{\cos \psi \cos \theta} \qquad \text{(EQ8)}$$

Par exemple, le rayon équivalent de la cible est déterminé en mettant en oeuvre un capteur optronique, par exemple une caméra infrarouge, permettant d'acquérir une image ou plusieurs images de la cible, et un dispositif de mesure de la distance permettant d'estimer la distance de tir, qui est la distance entre la cible et le point de lancement du projectile primaire au moment du lancement.

La figure 3 représente l'image de la cible telle qu'elle apparaîtrait dans le champ du capteur optronique. Un dispositif de traitement d'image permettrait alors d'évaluer les caractéristiques géométriques suivantes de la cible :

- le rayon géométrique de la cible : $R_{b \, géo}$
- la longueur apparente de la cible : $L_{b \, appar}$

La longueur apparente de la cible est fonction de la longueur géométrique de la cible et de l'angle de présentation, selon l'expression suivante :

$$L_{b\,appar} = L_{b\,géo} \sin \eta \qquad (EQ9)$$

On notera que la longueur apparente de la cible intervient dans l'expression du rayon équivalent de la cible.

A partir de l'évaluation de la longueur apparente de la cible on peut estimer la longueur réelle de la cible au moyen de la relation :

$$L_{b\,géo} = \frac{L_{b\,appar}}{\sin \eta} \qquad (EQ10)$$

Ce qui permet d'identifier le type de cible qui est engagé par le dispositif de poursuite.

Le type de cible est par exemple sélectionné parmi un ensemble comprenant les types drone, missile, hélicoptère, avion, bateau ou autre.

Dans un mode de réalisation, l'identification de la cible est effectuée par un opérateur du dispositif de lancement.

A partir du type de cible identifié, une recherche dans une base de données de cibles préalablement mémorisée permet d'obtenir des caractéristiques de vulnérabilité de la cible, en particulier l'épaisseur de paroi $e_p$ à transpercer et l'énergie minimale à injecter $E_0$ pour endommager les sous-ensembles de la cible.

L'étape 20 d'estimation des paramètres de la cible est suivie d'une étape 22 de détermination des paramètres du dispositif de lancement et du projectile primaire non guidé, à la distance d'interception $D_{inter}$.

On entend ici par distance d'interception la distance entre le point de lancement du projectile primaire et le plan d'interception 8.

Lors de l'étape 22 on obtient la vitesse $V_m$ du projectile primaire à l'instant de dispersion $t_1$, le supplément de vitesse $\Delta V$ conféré à chaque projectile secondaire au moment de la dispersion, le rayon intérieur $R_{int}$ du projectile primaire, la vitesse de rotation $\omega$ du projectile primaire à l'instant $t_1$ de dispersion.

Les valeurs des paramètres $V_m$ et $\Delta V$ permettent de calculer la vitesse longitudinale $V_{dep}$ des projectiles secondaires à l'instant de dispersion :

$$V_{dep} = V_m + \Delta V \qquad (EQ11)$$

La vitesse $V_{dep}$ est mémorisée.

On calcule également lors de cette étape la valeur de la fonction trigonométrique tangente du demi-angle $\alpha$ caractérisant le cône de dispersion des projectiles secondaires par la formule suivante :

$$\tan \alpha = \frac{R_{int}\,\omega}{V_{dep}} \qquad (EQ12)$$

La valeur angulaire $\alpha$ se déduit directement de la valeur $\tan \alpha$ en appliquant la fonction trigonométrique arctangente.

De plus, on obtient un paramètre caractérisant la dispersion globale du dispositif de lancement, l'écart-type $\sigma_{ang}$ de l'erreur angulaire gaussienne de dispersion.

L'écart-type $\sigma$ de l'erreur métrique de dispersion caractérisant la dispersion globale à la distance d'interception $D_{inter}$ est calculé par :

$$\sigma = \sigma_{ang}\,D_{inter} \qquad (EQ13)$$

Les valeurs de paramètres obtenues à l'étape 22 sont mémorisées.

L'étape 22 est suivie d'une étape 24 de comparaison de la distance d'interception de la cible à une distance seuil $D_{th}$, afin de sélectionner une méthode de calcul permettant de calculer le rayon de dispersion optimal $R_{dispopt}$.

La distance seuil $D_{th}$ est de préférence comprise dans l'intervalle 0 - 1000 m, par exemple elle est égale à 500m dans un mode de réalisation.

Selon le résultat de la comparaison, l'étape 24 est soit suivie d'une étape 26 de calcul du rayon de dispersion optimal selon une première méthode de calcul, soit de l'étape 28 de calcul d'un rayon de dispersion optimal selon une deuxième méthode de calcul.

Les deux méthodes sont des méthodes analytiques, le rayon de dispersion optimal étant calculé en fonction de valeurs de paramètres évalués au moment du tir.

La première méthode de calcul (méthode 1) est mise en oeuvre lorsque la distance d'interception est faible, inférieure à la distance seuil $D_{th}$, la probabilité pour qu'un projectile secondaire endommage la cible étant alors considérée comme étant voisine de 1.

Dans ce cas, la formule de calcul appliquée pour calculer le rayon de dispersion optimal est la suivante :

$$R_{dispopt} = \left( R_{b\,eq} \cdot \sigma \cdot (2N)^{1/2} \right)^{1/2} \qquad \text{(EQ14)}$$

Où $R_{b\,eq}$ est le rayon équivalent de la cible estimé et mémorisé à l'étape 20, $\sigma$ est l'écart-type de l'erreur métrique de dispersion à la distance d'interception $D_{inter}$, et N le nombre de projectiles secondaires éjectés à l'instant de dispersion $t_1$.

Le rayon de dispersion optimal ainsi calculé est le rayon de dispersion qui maximise la probabilité $P_k$ d'endommager la cible, sous l'hypothèse que la probabilité qu'un projectile secondaire ayant impacté la cible parvienne à l'endommager est égale à 1.

Pour obtenir la formule de calcul du rayon de dispersion optimal, on exprime la probabilité d'endommager la cible par une fonction du rayon de dispersion $R_{disp}$. Le rayon de dispersion optimal est la valeur du rayon de dispersion qui annule la dérivée de la fonction de probabilité d'endommager la cible.

La fonction de probabilité d'endommager une cible $P_k$, peut s'écrire comme un produit de la probabilité $P_c$ que le cône de dispersion caractérisant la gerbe de projectiles secondaires englobe la cible et de la probabilité $P_{kc}$ que la cible soit endommagée.

La relation suivante traduit cette condition :

$$P_k = P_c \cdot P_{kc} \qquad \text{(EQ15)}$$

On peut exprimer la relation ci-dessus par :

$$P_k = \left[ 1 - \exp\left( -\frac{1}{2} \left( \frac{R_{disp}}{\sigma} \right)^2 \right) \right] \cdot \left[ 1 - \exp\left( -N \cdot P_{kh} \cdot \left( \frac{R_{b\,eq}}{R_{disp}} \right)^2 \right) \right] \qquad \text{(EQ16)}$$

Où $P_{kh}$ est la probabilité qu'un projectile secondaire endommage la cible s'il a fait impact, et exp() est la fonction exponentielle.

Lorsqu'on applique la première méthode de calcul, on considère $P_{kh} \approx 1$ et la formule (EQ14) est obtenue en cherchant la valeur de $R_{disp}$ qui annule la dérivée de $P_k$ selon (EQ16) avec $P_{kh}=1$.

Lorsqu'à la comparaison de l'étape 24 on constate que la distance d'interception $D_{inter}$ est supérieure à la distance seuil $D_{th}$, l'étape 24 est suivie d'une étape 28 de calcul du rayon de dispersion optimal selon une deuxième méthode de calcul (méthode 2).

L'étape 28 comprend les sous-étapes suivantes.

Une première sous-étape 30 consiste en la détermination de paramètres des projectiles secondaires. Ces paramètres comprennent la vitesse de perforation $V_{str}$ le rayon de dispersion de référence $R_{ref}$ et le rayon de dispersion limite $R_{lim}$, définis ci-dessous.

On appelle vitesse de perforation la perte de vitesse d'un projectile secondaire lors de la traversée de la paroi de la cible au point d'interception.

La vitesse de perforation est déterminée par exemple par les formules de Thor, connues dans le domaine de la balistique, faisant intervenir l'épaisseur de la paroi de cible à traverser $e_p$, la masse du projectile secondaire $m_{sp}$ et la masse volumique du projectile secondaire $\rho_{sp}$.

Dans un mode de réalisation, un projectile secondaire est en tungstène, donc la masse volumique $\rho_{sp}$ est la masse volumique du tungstène.

Le rayon de dispersion $R_{ref}$ de référence est lié à une distance de référence $D_{ref}$.

$$R_{ref} = D_{ref} \tan \alpha \qquad \text{(EQ17)}$$

La distance de référence $D_{ref}$ est la distance parcourue par un projectile secondaire pour laquelle ledit projectile secondaire atteint la vitesse de perforation $V_{str}$ en supposant la vitesse de la cible nulle.

La distance de référence $D_{ref}$ vérifie la formule :

$$D_{ref} = -\frac{1}{k_{sp}} \log\left(\frac{V_{str}}{V_{dep}}\right) \qquad \text{(EQ18)}$$

Où $V_{dep}$ est la vitesse longitudinale du projectile secondaire à l'instant de dispersion déjà mentionnée, et $k_{sp}$ est le coefficient de ralentissement des projectiles secondaires, et log() représente le logarithme népérien.

Dans un mode de réalisation, le coefficient de ralentissement $k_{sp}$ est défini par :

$$k_{sp} = \frac{1}{2} \rho \frac{S_{sp} C_x}{m_{sp}} \qquad \text{(EQ19)}$$

Où $\rho$ est la masse volumique de l'air, $S_{sp}$ la surface de référence d'un projectile secondaire, $C_x$ le coefficient de traînée du projectile secondaire, et $m_{sp}$, la masse du projectile secondaire.

Le rayon de dispersion limite $R_{lim}$ est le rayon de dispersion pour lequel le projectile secondaire perfore la paroi de la cible mais est animé d'une vitesse nulle après perforation.

On applique la formule suivante pour calculer le rayon de dispersion limite :

$$R_{\lim} = R_{ref} + \frac{V_b}{V_{dep}} \cdot \frac{\tan\alpha}{k_{sp}} \qquad \text{(EQ20)}$$

Où $V_b$ est la vitesse estimée de la cible.

L'étape 30 est suivie d'une étape 32 de calcul d'un paramètre appelé paramètre énergétique $\lambda$, faisant intervenir le rapport entre l'énergie cinétique totale des projectiles secondaires lors de la dispersion et l'énergie minimale à injecter dans la cible $E_0$ :

$$\lambda = \frac{1}{2} \cdot \frac{N \cdot m_{sp} \cdot V_{dep}^2}{E_0} \left(\frac{R_{b\,eq} \cdot k_{sp}}{\tan\alpha}\right)^2 \qquad \text{(EQ21)}$$

Enfin, lors d'une étape 34 de détermination du rayon du rayon de dispersion optimal, on applique une méthode calculatoire pour trouver la valeur de $R_{disp}$ qui résout l'équation:

$$\exp\left(\lambda\left(\frac{R_{\lim}}{R_{disp}} - 1\right)^2\right) = 1 + \lambda\left(\frac{R_{\lim}}{R_{disp}} - 1\right)\frac{R_{\lim}}{R_{disp}}\exp\left(\frac{R_{disp}^2}{2\sigma^2}\right) \qquad \text{(EQ22)}$$

Par exemple, on applique la méthode du point fixe, bien connue dans le domaine de la résolution d'équations non linéaires.

En variante, on peut simplifier l'équation (EQ22) et appliquer l'expression analytique suivante pour obtenir une estimation de la valeur de $R_{dispopt}$ :

$$R_{dispopt} = \frac{R_{\lim}}{1 + \left(\frac{2}{\lambda}\right)^{\frac{1}{3}}} \qquad \text{(EQ23)}$$

A l'issue de la sous-étape 34 on obtient donc une valeur estimée du rayon de dispersion optimal dans le cas où la distance d'interception $D_{inter}$ est supérieure à la distance seuil $D_{th}$.

Les étapes de calcul de la valeur de rayon de dispersion optimal sont suivies d'une étape 36 de calcul de la distance de dispersion optimale :

$$D_{dispopt} = \frac{R_{dispopt}}{\tan \alpha} \qquad \text{(EQ24)}$$

Enfin, l'étape 36 est suivie d'une étape 38 de calcul du temps $t_{proj}$ de vol du projectile primaire avant dispersion, c'est-à-dire l'écart temporel entre l'instant de dispersion $t_1$ et l'instant de tir initial $t_0$ : $t_{proj} = t_1 - t_0$.

Le temps de vol du projectile primaire avant dispersion est un paramètre de programmation de la dispersion du projectile primaire en fonction de la distance de dispersion optimale, et donc du rayon de dispersion optimal calculé.

Le projectile primaire parcourt une distance $D_{proj}$ pendant la durée $t_{proj}$. Les projectiles secondaires parcourent la distance de dispersion optimale $D_{dispopt}$ pendant un temps $t_{spopt}$.

L'équation balistique à résoudre est :

$$D_{proj}(t_{proj}) + D_{dispopt}(t_{spopt}) = D_{b0} - V_b \cdot (t_{proj} + t_{spopt}) \qquad \text{(EQ25)}$$

$D_{b0}$ est la distance initiale de tir entre le point de lancement et la cible, et $V_b$ la vitesse estimée de la cible.

Dans un mode de réalisation, on utilise des tables de tir du projectile primaire pour résoudre l'équation balistique (EQ25) ci-dessus.

Ensuite on commande le lancement du projectile primaire à l'étape 40, à l'instant $t_0$, avec une programmation de dispersion des projectiles secondaires à $t_0 + t_{proj}$. Par exemple, le projectile primaire est équipé d'une horloge interne qui effectue un compte à rebours de durée $t_{proj}$.

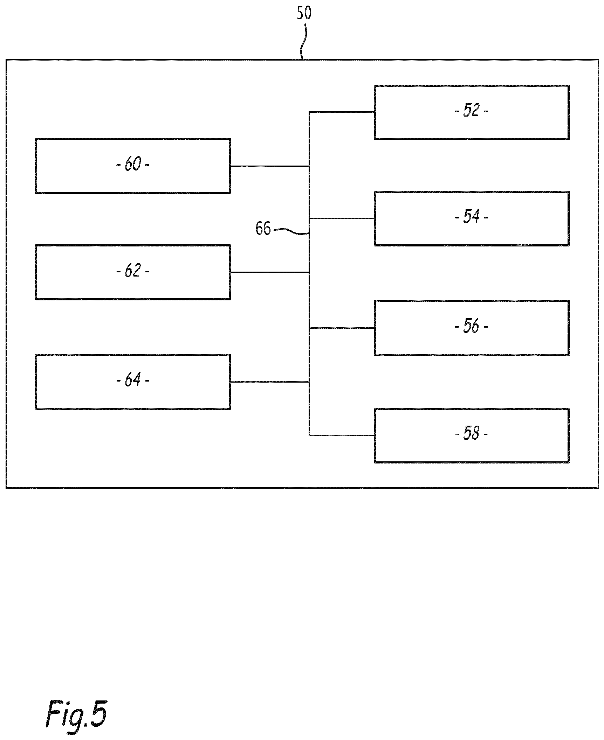

La figure 5 illustre schématiquement les principaux modules fonctionnels d'un dispositif de lancement de projectile selon un mode de réalisation de l'invention.

Le dispositif 50 est un dispositif de lancement de projectile primaire emportant une charge utile formée d'un ensemble de projectiles secondaires. Le projectile primaire est non guidé mais comporte une horloge interne permettant de programmer un instant de dispersion des projectiles secondaires.

Le dispositif de lancement 50 comporte un canon de tir 52 adapté à tirer des projectiles primaires à une cadence donnée.

Il comporte également un programmateur d'instant de dispersion 54, qui commande la programmation de la durée de vol du projectile primaire.

Le dispositif de lancement 50 comporte un capteur optronique 56, par exemple une caméra infrarouge, et un dispositif de mesure de distance ou télémètre 58. Les modules 56 et 58 permettent d'évaluer la vitesse de la cible et la distance entre le point de lancement et la cible.

Enfin, le dispositif de lancement 50 comporte des modules 60, 62, 64 formant un dispositif de calcul adapté à mettre en oeuvre le procédé de l'invention, par exemple un ordinateur connecté en entrée/sortie aux modules 52 à 58. En variante, le dispositif de calcul est externe au dispositif de lancement 50, et il est adapté à coopérer avec le dispositif de lancement, par exemple par l'intermédiaire d'une liaison filaire.

Le module 60 est un module d'interface homme/machine pour interaction avec un opérateur. Le module 62 est une unité centrale de calcul comprenant un ou plusieurs processeurs, apte à exécuter des instructions de programme informatique lorsqu'il est mis sous tension. Le module 64 est un module de stockage d'informations, apte à stocker des valeurs de paramètres et des instructions de code exécutable permettant la mise en oeuvre de programmes comportant des instructions de code aptes à mettre en oeuvre le procédé selon l'invention.

En particulier, le module 64 mémorise une base de données des caractéristiques de vulnérabilité des cibles.

Les divers blocs fonctionnels décrits ci-dessus sont connectés via un bus de communication 66.

En variante, les modules 62 et 64 sont réalisés par des dispositifs électroniques de type circuits logiques programmables, tels des cartes électroniques à base de FPGA ou ASIC.

Avantageusement, l'invention permet le calcul, effectué sensiblement en temps réel, d'une distance de dispersion optimale à distance d'interception donnée, grâce à la mise en oeuvre d'équations analytiques.

Avantageusement, les calculs effectués prennent en compte des paramètres caractéristiques de la cible évalués en temps réel, grâce aux capteurs optroniques et au dispositif de mesure de distance du dispositif de lancement, ainsi que des caractéristiques du dispositif de lancement.

Ainsi, la valeur de distance de dispersion optimale calculée est mieux adaptée à la situation opérationnelle que dans le cas d'estimation d'une distance de dispersion à partir de simulations préalables effectuées en usine.

**Revendications**

1. Procédé de lancement de projectiles sur une cible (10) à atteindre, par un dispositif de lancement adapté à lancer un projectile primaire (2) non guidé porteur d'une pluralité de projectiles secondaires (4) et à programmer une dispersion par le projectile primaire de la pluralité de projectiles secondaires à l'intérieur d'un cône de dispersion (6), avec une vitesse de dispersion associée, un plan d'interception (8), orthogonal par rapport au cône de dispersion (6) passant par la cible définissant un rayon de dispersion des projectiles secondaires comportant des étapes de :

   - estimation (20) d'au moins un paramètre caractéristique de la cible comprenant une vitesse estimée de la cible et une distance entre la cible et le dispositif de lancement,
   - détermination (22) de paramètres caractéristiques du dispositif de lancement comprenant la vitesse de dispersion des projectiles secondaires et une valeur caractéristique du cône de dispersion, pour une distance d'interception entre le dispositif de lancement et le plan d'interception,
   - calcul (26, 28) d'un rayon de dispersion optimal permettant de maximiser une probabilité d'endommager la cible, en fonction du ou des paramètres caractéristiques de la cible et des paramètres caractéristiques du dispositif de lancement, le calcul du rayon de dispersion optimal comprenant une comparaison (24) de la distance d'interception ($D_{inter}$) à une distance seuil ($D_{th}$), et la sélection d'une méthode de calcul en fonction du résultat de la comparaison,

      dans lequel lorsque la distance d'interception ($D_{inter}$) est supérieure à la distance seuil ($D_{th}$), le procédé comprend une étape d'estimation (30) de paramètres des projectiles secondaires et un calcul (32, 34) du rayon de dispersion optimal par résolution numérique d'une équation mettant en oeuvre lesdits paramètres des projectiles secondaires, des paramètres caractéristiques de la cible et des paramètres caractéristiques du dispositif de lancement,
      dans lequel, ladite cible ayant une paroi, l'estimation des paramètres des projectiles secondaires comprend l'estimation d'une vitesse de perforation égale à la perte de vitesse d'un projectile secondaire lors d'une traversée de la paroi de la cible, d'une distance parcourue par un projectile secondaire pour atteindre la vitesse de perforation et d'un coefficient de ralentissement du projectile secondaire traversant la paroi, et

      - calcul (38) d'un paramètre de programmation de la dispersion du projectile primaire en fonction du rayon de dispersion optimal calculé.

2. Procédé selon la revendication 1, dans lequel lorsque la distance d'interception ($D_{inter}$) est inférieure à la distance seuil ($D_{th}$), le calcul d'un rayon de dispersion optimal met en oeuvre une première formule de calcul faisant intervenir le nombre de projectiles secondaires dispersés, un rayon équivalent de la cible et l'écart-type de l'erreur métrique gaussienne de dispersion du dispositif de lancement à la distance d'interception.

3. Procédé selon l'une des revendications 1 ou 2, dans lequel l'étape d'estimation d'au moins un paramètre caractéristique de la cible comporte en outre une identification d'un type de cible et l'obtention de caractéristiques de vulnérabilité de la cible en fonction du type de cible.

4. Procédé selon la revendication 3, dans lequel l'obtention de caractéristique de vulnérabilité de la cible met en oeuvre une base de données de cibles préalablement mémorisée.

5. Procédé selon l'une des revendications 1 à 4, dans lequel la détermination (22) de paramètres caractéristiques du dispositif de lancement comprend en outre la détermination d'un supplément de vitesse conféré à chaque projectile secondaire lors de la dispersion et le calcul d'une vitesse longitudinale des projectiles secondaires lors de la dispersion.

6. Dispositif de lancement de projectiles sur une cible (10) à atteindre adapté à lancer un projectile primaire (2) non guidé porteur d'une pluralité de projectiles secondaires (4) et à programmer une dispersion par le projectile primaire de la pluralité de projectiles secondaires à l'intérieur d'un cône de dispersion (6), avec une vitesse de dispersion associée, un plan d'interception (8), orthogonal par rapport au cône de dispersion (6) passant par la cible (10) définissant un rayon de dispersion des projectiles secondaires, comportant:

   - un capteur optronique (56) et un dispositif (58) de mesure de distance adaptés à estimer au moins un paramètre caractéristique de la cible comprenant une vitesse estimée de la cible et une distance entre la cible et le dispositif de lancement,
- au moins un module de calcul (62), adapté à :

- déterminer des paramètres caractéristiques du dispositif de lancement comprenant la vitesse de dispersion des projectiles secondaires et une valeur caractéristique du cône de dispersion, pour une distance d'interception entre le dispositif de lancement et le plan d'interception,
- calculer un rayon de dispersion optimal permettant de maximiser la probabilité d'endommager la cible dans le plan d'interception, en fonction du ou des paramètres caractéristiques de la cible et des paramètres caractéristiques du dispositif de lancement, le calcul du rayon de dispersion optimal comprenant une comparaison (24) de la distance d'interception ($D_{inter}$) à une distance seuil ($D_{th}$), et la sélection d'une méthode de calcul en fonction du résultat de la comparaison

dans lequel lorsque la distance d'interception ($D_{inter}$) est supérieure à la distance seuil ($D_{th}$), le procédé comprend une étape d'estimation (30) de paramètres des projectiles secondaires et un calcul (32, 34) du rayon de dispersion optimal par résolution numérique d'une équation mettant en oeuvre lesdits paramètres des projectiles secondaires, des paramètres caractéristiques de la cible et des paramètres caractéristiques du dispositif de lancement,
dans lequel, ladite cible ayant une paroi, l'estimation des paramètres des projectiles secondaires comprend l'estimation d'une vitesse de perforation égale à la perte de vitesse d'un projectile secondaire lors d'une traversée de la paroi de la cible, d'une distance parcourue par un projectile secondaire pour atteindre la vitesse de perforation et d'un coefficient de ralentissement du projectile secondaire traversant la paroi
et

- calculer un paramètre de programmation de la dispersion du projectile primaire en fonction du rayon de dispersion optimal calculé.

7. Dispositif selon la revendication 6, comprenant en outre un module (54) de programmation de la dispersion d'un projectile primaire.

8. Programme d'ordinateur comportant des instructions logicielles qui, lorsqu'elles sont mises en oeuvre par un dispositif de calcul adapté à coopérer avec un dispositif de lancement de projectile selon l'une des revendications 6 ou 7, mettent en oeuvre un procédé de lancement de projectiles conforme aux revendications 1 à 5.

## Patentansprüche

1. Verfahren zum Abschießen von Projektilen auf ein zu treffendes Ziel (10) durch eine Abschussvorrichtung, die angepasst ist, um ein ungelenktes Primärprojektil (2) abzuschießen, das eine Vielzahl von Sekundärprojektilen (4) trägt, und eine Streuung der Vielzahl von Sekundärprojektilen durch das Primärprojektil innerhalb eines Streukegels (6) mit einer assoziierten Streugeschwindigkeit zu programmieren, wobei eine Abfangebene (8) orthogonal zu dem Streukegel (6), die durch das Ziel verläuft, einen Streuradius der Sekundärgeschosse definiert, umfassend die folgenden Schritte:

- Schätzen (20) mindestens eines charakteristischen Parameters des Ziels, umfassend eine geschätzte Geschwindigkeit des Ziels und eine Entfernung zwischen dem Ziel und der Abschussvorrichtung,
- Bestimmen (22) von charakteristischen Parametern der Abschussvorrichtung, umfassend die Streugeschwindigkeit der Sekundärprojektile und einen charakteristischen Wert des Streukegels, für eine Abfangentfernung zwischen der Abschussvorrichtung und der Abfangebene,
- Berechnen (26, 28) eines optimalen Streuradius, der es ermöglicht, eine Wahrscheinlichkeit zu maximieren, das Ziel zu beschädigen, abhängig von dem oder den charakteristischen Parametern des Ziels und den charakteristischen Parametern der Abschussvorrichtung, die Berechnung des optimalen Streuradius umfassend einen Vergleich (24) der Abfangentfernung ($D_{inter}$) mit einem Schwellenwertentfernung ($D_{th}$) und die Auswahl eines Berechnungsverfahrens abhängig von dem Resultat des Vergleichs,

wobei, wenn die Abfangentfernung ($D_{inter}$) größer ist als die Schwellenwertentfernung ($D_{th}$), das Verfahren einen Schritt eines Schätzens (30) von Parametern der Sekundärgeschosse und eine Berechnung (32, 34) des optimalen Streuradius durch Lösen einer Gleichung umfasst, die die Parameter der Sekundärprojektile, charakteristische Parameter des Ziels und charakteristische Parameter der Abschussvorrichtung einsetzt, wobei, da das Ziel eine Wand aufweist, die Schätzung der Parameter der Sekundärgeschosse die Schätzung einer Perforationsgeschwindigkeit, die gleich wie der Geschwindigkeitsverlust eines Sekundärgeschosses bei Durchquerung der Wand des Ziels ist, einer von einem Sekundärgeschoss zurückgelegten Strecke, um die Perforationsgeschwindigkeit zu erreichen, und eines Verzögerungskoeffizienten des die Wand durchquerenden Sekundärgeschosses umfasst, und

- Berechnen (38) eines Parameters zur Programmierung der Streuung des Primärgeschosses abhängig von dem berechneten optimalen Streuradius.

2. - Verfahren nach Anspruch 1, wobei, wenn die Abfangentfernung ($D_{inter}$) kleiner ist als die Schwellenwertentfernung ($D_{th}$), die Berechnung eines optimalen Streuradius eine erste Berechnungsformel einsetzt, die die Anzahl der gestreuten Sekundärgeschosse, einen äquivalenten Zielradius und die Standardabweichung des Gaußschen metrischen Streufehlers der Abschussvorrichtung bei der Abfangentfernung einbezieht.

3. Verfahren nach einem der Ansprüche 1 oder 2, wobei der Schritt eines Schätzens mindestens eines charakteristischen Parameters des Ziels zusätzlich ein Identifizieren eines Zieltyps und ein Erlangen von Merkmalen der Verwundbarkeit des Ziels abhängig von dem Zieltyp umfasst.

4. Verfahren nach Anspruch 3, wobei das Erlangen von Anfälligkeitsmerkmalen des eine zuvor gespeicherte Zieldatenbank implementiert.

5. Verfahren nach einem der Ansprüche 1 bis 4, wobei das Bestimmen (22) von charakteristischen Parametern der Abschussvorrichtung zusätzlich ein Bestimmen eines Geschwindigkeitszuschlags, der jedem Sekundärgeschoss beim Streuen verliehen wird, und ein Berechnen einer Längsgeschwindigkeit der Sekundärgeschosse beim Streuen umfasst.

6. Vorrichtung zum Abschießen von Geschossen auf ein zu treffendes Ziel (10), die angepasst ist, um ein ungelenktes Primärprojektil (2) abzuschießen, das eine Vielzahl von Sekundärprojektilen (4) trägt, und eine Streuung der Vielzahl von Sekundärprojektilen durch das Primärprojektil innerhalb eines Streukegels (6) mit einer assoziierten Streugeschwindigkeit zu programmieren, wobei eine Abfangebene (8) orthogonal zu dem Streukegel (6), die durch das Ziel (10) verläuft, einen Streuradius der Sekundärgeschosse definiert, umfassend:

- einen optronischen Sensor (56) und eine Entfernungsmessvorrichtung (58), die angepasst sind, um mindestens einen charakteristischen Parameter des Ziels zu schätzen, umfassend eine geschätzte Geschwindigkeit des Ziels und eine Entfernung zwischen dem Ziel und der Abschussvorrichtung,
- mindestens ein Rechenmodul (62), das zu Folgendem angepasst ist:
- bestimmen von charakteristischen Parametern der Abschussvorrichtung, die die Streugeschwindigkeit der Sekundärgeschosse und einen charakteristischen Wert des Streukegels umfassen, für eine Abfangentfernung zwischen der Abschussvorrichtung und der Abfangebene,
- Berechnen eines optimalen Streuradius, der es ermöglicht, eine Wahrscheinlichkeit zu maximieren, das Ziel in der Abfangebene zu beschädigen, abhängig von dem oder den charakteristischen Parametern des Ziels und den charakteristischen Parametern der Abschussvorrichtung, die Berechnung des optimalen Streuradius umfassend einen Vergleich (24) der Abfangentfernung ($D_{inter}$) mit einem Schwellenwertentfernung ($D_{th}$) und die Auswahl eines Berechnungsverfahrens abhängig von dem Resultat des Vergleichs,

wobei, wenn die Abfangentfernung ($D_{inter}$) größer ist als die Schwellenwertentfernung ($D_{th}$), das Verfahren einen Schritt eines Schätzens (30) von Parametern der Sekundärgeschosse und eine Berechnung (32, 34) des optimalen Streuradius durch Lösen einer Gleichung umfasst, die die Parameter der Sekundärprojektile, charakteristische Parameter des Ziels und charakteristische Parameter der Abschussvorrichtung einsetzt, wobei, da das Ziel eine Wand aufweist, die Schätzung der Parameter der Sekundärgeschosse die Schätzung einer Perforationsgeschwindigkeit, die gleich wie der Geschwindigkeitsverlust eines Sekundärgeschosses bei Durchquerung der Wand des Ziels ist, einer von einem Sekundärgeschoss zurückgelegten Strecke, um die Perforationsgeschwindigkeit zu erreichen, und eines Verzögerungskoeffizienten des die Wand durchquerenden Sekundärgeschosses umfasst, und

- Berechnen eines Parameters zur Programmierung der Streuung des Primärgeschosses abhängig von dem berechneten optimalen Streuradius.

**7.** Vorrichtung nach Anspruch 6, ferner umfassend ein Modul (54) zur Programmierung der Streuung eines Primärgeschosses.

**8.** Computerprogramm, umfassend Softwareanweisungen, die, wenn sie von einer Recheneinrichtung implementiert werden, die angepasst ist, um mit einer Geschossabschussvorrichtung nach einem der Ansprüche 6 oder 7 zusammenzuwirken, ein Verfahren zum Abschießen von Geschossen gemäß den Ansprüchen 1 bis 5 implementieren.

**Claims**

**1.** A method for launching projectiles onto a target (10) to be reached, using a launching device adapted to launch an unguided primary projectile (2) carrying a plurality of secondary projectiles (4) and to program a dispersion by the primary projectile of the plurality of secondary projectiles within a dispersal cone (6), with an associated dispersal velocity, an interception plane (8), orthogonal with respect to the dispersal cone (6) passing through the target defining a dispersal radius of the secondary projectiles comprising the steps of:

- estimating (20) at least one characteristic parameter of the target, comprising an estimated velocity of the target and a distance between the target and the launching device,
- determining (22) characteristic parameters of the launching device, including the dispersion velocity of the secondary projectiles and a characteristic value of the dispersion cone, for an interception distance between the launching device and the interception plane,
- calculating (26, 28) an optimum dispersion radius for maximising a probability of damaging the target, as a function of the characteristic parameter(s) of the target and the characteristic parameters of the launching device, the calculation of the optimum dispersion radius comprising a comparison (24) of the interception distance ($D_{inter}$) with a threshold distance ($D_{th}$), and the selection of a calculation method as a function of the result of the comparison,

in which, when the interception distance ($D_{inter}$) is greater than the threshold distance ($D_{th}$), the method comprises a step (30) of estimating parameters of the secondary projectiles and a calculation (32, 34) of the optimum dispersion radius by numerically solving an equation involving said parameters of the secondary projectiles, characteristic parameters of the target, and characteristic parameters of the launching device, in which, said target having a wall, the estimating of the parameters of the secondary projectiles comprises the estimating of a perforation velocity equal to the loss of velocity of a secondary projectile when passing through the wall of the target, of a distance travelled by a secondary projectile to reach the perforation velocity, and of a coefficient of deceleration of the secondary projectile passing through the wall, and

- calculating (38) a parameter for programming the dispersion of the primary projectile as a function of the calculated optimum dispersion radius.

**2.** The method according to claim 1, in which when the interception distance ($D_{inter}$) is less than the threshold distance ($D_{th}$), the calculating of an optimal dispersion radius implements a first calculation formula involving the number of dispersed secondary projectiles, an equivalent radius of the target and the standard deviation of the Gaussian dispersion metric error of the launching device at the interception distance.

**3.** The method according to one of claims 1 or 2, in which the step of estimating at least one characteristic parameter of the target further comprises identifying a type of target and obtaining vulnerability characteristics of the target as a function of the type of target.

**4.** The method according to claim 3, in which the vulnerability characteristics of the target are obtained using a previously stored target database.

**5.** The method according to one of claims 1 to 4, in which the determining (22) of characteristic parameters of the launching device further comprises the determining of a velocity supplement conferred on each secondary projectile during dispersion and the calculating of a longitudinal velocity of the secondary projectiles during dispersion.

6. A device for launching projectiles onto a target (10) to be reached, adapted to launch an unguided primary projectile (2) carrying a plurality of secondary projectiles (4) and to program a dispersion by the primary projectile of the plurality of secondary projectiles within a dispersal cone (6), with an associated dispersal velocity, an interception plane (8), orthogonal with respect to the dispersal cone (6) passing through the target (10) defining a dispersal radius of the secondary projectiles comprising:

   - an optronic sensor (56) and a distance measurement device (58) adapted to estimate at least one characteristic parameter of the target, comprising an estimated velocity of the target and a distance between the target and the launching device,
   - at least one calculation module (62), adapted to:
   - determining characteristic parameters of the launching device, including the dispersion velocity of the secondary projectiles and a characteristic value of the dispersion cone, for an interception distance between the launching device and the interception plane,
   - calculating an optimum dispersion radius for maximising the probability of damaging the target in the interception plane, as a function of the characteristic parameter(s) of the target and the characteristic parameters of the launching device, the calculation of the optimum dispersion radius comprising a comparison (24) of the interception distance ($D_{inter}$) with a threshold distance ($D_{th}$), and the selection of a calculation method as a function of the result of the comparison.

   in which, when the interception distance ($D_{inter}$) is greater than the threshold distance ($D_{th}$), the method comprises a step (30) of estimating parameters of the secondary projectiles and a calculation (32, 34) of the optimum dispersion radius by numerically solving an equation involving said parameters of the secondary projectiles, characteristic parameters of the target, and characteristic parameters of the launching device, in which, said target having a wall, the estimating of the parameters of the secondary projectiles comprises the estimating of a perforation velocity equal to the loss of velocity of a secondary projectile when passing through the wall of the target, of a distance travelled by a secondary projectile to reach the perforation velocity, and of a coefficient of deceleration of the secondary projectile passing through the wall and

   - calculating a parameter for programming the dispersion of the primary projectile as a function of the calculated optimum dispersion radius.

7. The device according to claim 6, further comprising a module (54) for programming the dispersion of a primary projectile.

8. A computer program comprising software instructions which, when implemented by a computing device adapted to cooperate with a projectile launching device according to one of claims 6 or 7, implement a projectile launching method according to claims 1 to 5.

Fig.1

*Fig.2*

*Fig.3*

Estimation paramètres cible — 20

Détermination paramètres de lancement à $D_{inter}$ — 22

Comparaison avec $D_{th}$ — 24

26 — Calcul $R_{disp}$ optimal par méthode 1

28 — Calcul $R_{disp}$ optimal par méthode 2

Estimation paramètres projectiles secondaires — 30

Calcul paramètre $\lambda$ — 32

Calcul $R_{disp}$ optimal — 34

Calcul distance de dispersion optimale — 36

Calcul temps $t_{proj}$ avant dispersion — 38

Commande lancement avec $t_{proj}$ — 40

Fig.4

50

- 52 -

- 60 -

66

- 54 -

- 62 -

- 56 -

- 64 -

- 58 -

Fig.5

**RÉFÉRENCES CITÉES DANS LA DESCRIPTION**

**Documents brevets cités dans la description**

- US 2006175464 A1

- US 2010117888 A1